(19) **Europäisches Patentamt**
**European Patent Office**
**Office européen des brevets**

(11) **EP 2 701 018 B1**

(12) **EUROPÄISCHE PATENTSCHRIFT**

(45) Veröffentlichungstag und Bekanntmachung des Hinweises auf die Patenterteilung:
**21.10.2015 Patentblatt 2015/43**

(51) Int Cl.:
***G05B 19/042*** *(2006.01)*

(21) Anmeldenummer: **13002203.1**

(22) Anmeldetag: **25.04.2013**

(54) **Verfahren zur sicheren Parametrierung eines Feldgeräts**

Method for securely adjusting the parameters of a field device

Procédé de paramétrage sécurisé d'un appareil de terrain

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2012 DE 102012016403**

(43) Veröffentlichungstag der Anmeldung:
**26.02.2014 Patentblatt 2014/09**

(73) Patentinhaber: **Krohne Messtechnik GmbH**
**47058 Duisburg (DE)**

(72) Erfinder:
• **Gerding, Michael**
**44805 Bochum (DE)**
• **Stettin, Gerd**
**75399 Unterreichenbach (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**EP-A1- 0 809 222 EP-A2- 1 860 513**
**DE-A1-102010 062 908**

**Beschreibung**

Die Erfindung betrifft ein Verfahren zur Parametrierung eines Feldgeräts, wobei mindestens ein Parameterwert des Feldgeräts einstellbar ist und das Feldgerät mindestens eine Schnittstelle aufweist. Dabei wird mindestens ein zumindest von dem mindestens einen Parameterwert abhängiger Kontrollwert ermittelt. Ferner betrifft die Erfindung ein entsprechendes Feldgerät mit mindestens einer Schnittstelle, wobei mindestens ein Parameterwert des Feldgeräts einstellbar ist und wobei bei einer Parametrierung das Feldgerät mindestens einen zumindest von dem mindestens einen Parameterwert abhängigen Kontrollwert ermittelt.

Im Bereich der modernen Prozessautomatisierung werden Feldgeräte z. B. als Messgeräte zur Überwachung von Prozessgrößen und als Aktoren für die Beeinflussung der Prozesse verwendet. Die Kommunikation zwischen den Feldgeräten untereinander und beispielsweise zwischen den Feldgeräten und einer übergeordneten Leitwarte erfolgt meist über Feldbusse und unter Anwendung von standardisierten Kommunikationsprotokollen (z. B. HART oder über 4...20 mA-Stromsignale). Daneben ist es gelegentlich vorgesehen, dass die Feldgeräte über eine eigene Anzeigeeinheit verfügen, die die Darstellung beispielsweise von Messwerten vor Ort erlaubt.

Für eine auf die Prozesse oder Einsatzbedingungen möglichst gut angepasste Verwendung der Feldgeräte lässt sich häufig eine große Anzahl an Parameterwerten einstellen bzw. vorgeben. Bei der Herstellung der Feldgeräte oder bei einer ersten Inbetriebnahme werden oft Standardwerte hierfür gesetzt. Dabei kann es je nach der Bedeutung der Parameter oder je nach der Art der Anwendung sein, dass einige Parameter nicht veränderbar sind oder aber erst nach einer Freigabe durch einen Sicherheitsschlüssel veränderbar sind.

Insbesondere bei Anwendungen der Feldgeräte in sicherheitskritischen Bereichen muss eine korrekte Einstellung der Parameterwerte garantiert sein. Relevant sind bei den jeweiligen Sicherheitsanforderungen ggf. auch die Vorgaben, um dem insbesondere in der Prozessautomatisierung wichtigen SIL-Standard (SIL = Safety Integrity Level) zu genügen.

In diesem Zusammenhang beschreibt beispielsweise die Offenlegungsschrift DE 10 2004 055 971 ein Verfahren zum Parametrieren eines Gerätes. Dabei werden die Parameterwerte wenigstens einmal zur Kontrolle vom Gerät zur Parametriereinheit rückgelesen.

Die Problematik besteht jedoch darin, dass für die Kommunikation zwischen Feldgerät und Parametriereinheit ggf. unsichere Kontrollwege oder -kanäle verwendet werden, die die übertragenen Daten verfälschen könnten.

In der DE 10 2010 062 908 A1 wird ein Verfahren zur Parametrierung eines Feldgerätes offenbart, wobei in dem Gerät und in einer Parametriereinheit aus den einstellbaren Parametern jeweils ein Parametertoken berechnet wird. In einer Ausgestaltung wird vom Gerät über eine Netzwerkschnittstelle der vom Gerät berechnete Parametertoken ausgegeben.

Eine Übermittlung von Daten - z. B. für die Übertragung von Parametrierdaten - für Feldgeräte in Prozessleitsystemen offenbart die EP 0 809 222 A1, wobei eine Gleichstromübertragung mit der 4...20mA-Stromschleife stattfindet.

Eine Schaltung zur sicheren Übermittlung von Signalen lässt sich der EP 1 860 513 A2 entnehmen. Dabei wird offenbart, wie der Schleifenstrom einer entsprechenden Schnittstelle des Feldgeräts zuverlässig eingestellt wird. Der einzustellende Stromwert hängt dabei von Mess-, Parametrier- und Kalibrierdaten ab.

Der Erfindung liegt daher die Aufgabe zugrunde, ein Verfahren zur Parametrierung eines Feldgerätes - und ein entsprechendes Feldgerät - anzugeben, das die sichere Übergabe von Parameterwerten über eine möglicherweise unsichere Datenverbindung erlaubt.

Das erfindungsgemäße Verfahren, bei dem die zuvor hergeleitete und aufgezeigte Aufgabe gelöst ist, ist zunächst und im Wesentlichen durch folgende Schritte gekennzeichnet:

Mindestens ein Kontrollwert wird ermittelt, der von mindestens einem Parameterwert des Feldgeräts abhängig ist. Dieser Kontrollwert kann dabei auch als Prüfwert, Prüfsumme oder "checksum" verstanden und ggf. entsprechend ermittelt werden. Dabei lässt sich der Kontrollwert beispielsweise ermitteln, indem er über eine vorgebbare Formel berechnet wird, d. h. indem der Parameterwert oder ggf. mehrere Parameterwerte mit ihren Zahlenwerten in eine vorgegebene Formel eingesetzt werden oder - alternativ - indem der Kontrollwert über den Parameterwert einer vorgebbaren und insbesondere passend im Feldgerät hinterlegten Wertetabelle entnommen wird. Werden mehrere Parameterwerte verwendet, so handelt es sich vorzugsweise um eine mehrdimensionale Tabelle. In einer zusätzlichen Ausgestaltung werden die Berechnung über eine Formel und das Verwenden von hinterlegten Daten aus Tabellen miteinander kombiniert. Die Ermittlung des Kontrollwerts erfolgt insbesondere im Feldgerät und durch das Feldgerät.

Im nächsten Schritt des Verfahrens werden ausgehend von dem Kontrollwert mindestens zwei Ausgangssignale erzeugt, die sich voneinander unterscheiden. Die erzeugten Ausgangssignale werden als Stromsignale über die Schnittstelle des Feldgeräts, die entsprechend für die Ausgabe von Stromsignalen ausgestaltet ist, ausgegeben. Bei der Schnittstelle handelt es sich beispielsweise um den Zugang zu einer Stromschleife.

Bei dem erfindungsgemäßen Verfahren wird mindestens ein Parameterwert oder werden alternativ mehrere Parameterwerte des Feldgeräts in einen Kontrollwert übersetzt bzw. in ihm verschlüsselt. Dieser Kontrollwert wird - ggf, in Verbindung mit weiteren Daten oder Werten usw.- in Ausgangssignale des Feldgeräts übertragen und als Stromsignale ausgegeben. Umgekehrt tragen dadurch die Stromsignale, z. B. deren Amplitude oder deren Frequenz usw. den Kontrollwert, so dass sich aus den gemessenen Stromsignalen der Kontrollwert ableiten lässt. Dies eröffnet die Möglichkeit, über einen Stromausgang die Parameterwerte sicher nach außen zu übermitteln. Dabei ist insbesondere ein Vorteil, dass ein Strommessgerät zum Abgriff der Signale ausreichend ist.

Für den Fall, dass es sich bei dem Feldgerät um ein Messgerät handelt, ist in einer Ausgestaltung vorgesehen, dass der mindestens eine Kontrollwert in Abhängigkeit von einem Messwert erzeugt wird. Dabei handelt es sich in einer Ausgestaltung um einen aktuell gemessenen Wert, in einer alternativen Ausgestaltung um einen der Parametrierung vorausgehenden gemessenen Wert und in einer weiteren Ausgestaltung um einen simulierten Messwert. Dabei wird insbesondere ein solcher Messwert verwendet, der auch der Empfängerseite des Ausgangssignals bekannt ist bzw. wird der Messwert nach einer Regel gewählt, die der Empfängerseite bekannt ist.

Die Ausgangssignale hängen dabei jeweils vom gleichen Kontrollwert ab. Für die Erzeugung der Ausgangssignale wird dabei ein vorgebbares Variationsschema verwendet, durch das auf der Empfangsseite auf den Kontrollwert rückgeschlossen werden kann. Es werden die Ausgabesicherheit und die Sicherheit, die richtigen Daten zu empfangen, erhöht, indem eine mehrfache Ausgabe erfolgt.

Das Variationsschema für die Erzeugung der Ausgangssignale besteht darin, dass die erzeugten Ausgangssignale zwischen einem vorgebbaren Minimalwert $I_{MIN}$ und einem vorgebbaren Maximalwert $I_{MAX}$ mit einer vorgebbaren Schrittweite $\Delta I$ liegen. Durch den Minimalwert $I_{MIN}$ und den Maximalwert $I_{MAX}$ wird auch ein Signalbereich aufgespannt, der in einer Variante dem Signalbereich entspricht, in dem die Signale, die während des normalen Betriebs des Feldgeräts ausgegeben werden, liegen. Zu denken ist beispielsweise an eine Signalübertragung durch eine Stromschleife zwischen 4 mA und 20 mA. Die einzelnen Ausgangssignale liegen zwischen diesen Grenzwerten und haben zueinander eine vorgegebene Schrittweite $\Delta I$, beispielsweise jeweils 10%-Schritte des gesamten Signalbereichs.

In einer Ausgestaltung wird zusätzlich mindestens ein Ausgangssignal derartig erzeugt, dass es außerhalb eines vorgebbaren Signalbereichs liegt. Ein solcher vorgebbarer Signalbereich ist beispielsweise der in der vorhergehenden Ausgestaltung beschriebene Bereich, der in einer Variante zwischen 4 mA und 20 mA liegt. Für die Parametrierung wird in dieser Ausgestaltung ein Ausgangssignal außerhalb dieses Signalbereichs, der insbesondere ein für den normalen Betrieb des Feldgeräts verwendeter Bereich ist, erzeugt und ausgegeben.

Für das Einstellen insbesondere mehrerer Parameterwerte verfügt das Feldgerät in einer Ausgestaltung über mindestens eine Service-Schnittstelle, an die beispielsweise für die Parametrierung eine entsprechende Parametriereinheit angeschlossen wird. Alternativ verfügt das Feldgerät über eine Anzeigeeinheit, die die Eingabe von Daten erlaubt, als Service-Schnittstelle.

Eine Ausgestaltung bezieht sich auf den Umgang auf der die Ausgangssignale empfangenden Seite mit den Ausgangssignalen. Die Ausgangssignale werden empfangen und zumindest aus den Ausgangssignalen wird ein Vergleichswert ermittelt. Im Idealfall ist der Vergleichswert gleich dem Kontrollwert oder steht in einem bekannten Verhältnis dazu. Anschließend wird der ermittelte Vergleichswert mindestens mit einem Sollwert verglichen. Der Sollwert ergibt sich dabei insbesondere aus den (Soll-)Werten, die die Parameterwerte im Feldgerät aufweisen sollen, und ggf. aus weiteren Werten, wie z. B. dem Messwert bei dem als Messgerät ausgestalteten Feldgerät. Weiterhin kann der Sollwert auch die Abhängigkeit vom oben genannten Variationsschema aufweisen. Der Sollwert wird insbesondere nach dem gleichen Algorithmus, der gleichen Formel oder den gleichen Tabellendaten ermittelt, wie sie für den Kontrollwert Anwendung finden. Aus dem Vergleich von Soll- und Vergleichswert zeigt sich, ob der Parameterwert oder die Parameterwerte richtig gesetzt worden ist bzw. sind. Im Fall der Übereinstimmung - ggf. innerhalb eines Toleranzbereichs - kann beispielsweise am Feldgerät die Parametrierung durch Quittierung abgeschlossen oder es kann ein Parameterwert gesichert werden. Im Fall der Abweichung wird ggf. die Parametrierung wiederholt oder es wird eine andere Datenverbindung erzeugt oder die Parametrierung wird abgebrochen und das Feldgerät geht in einen gesicherten (Default-)Zustand über.

Alternativ oder ergänzend wird aus dem Vergleichswert direkt auf den Parameterwert oder die Parameterwerte rückgerechnet bzw. rückgeschlossen.

Die zuvor hergeleitete und aufgezeigte Aufgabe ist nach einer weiteren Lehre der Erfindung gelöst durch ein Feldgerät, das dadurch gekennzeichnet ist, dass das Feldgerät mehrere sich voneinander unterscheidende und mindestens vom Kontrollwert abhängige Ausgangssignale derartig erzeugt, dass die Ausgangssignale zwischen einem vorgebbaren Minimalwert und einem vorgebbaren Maximalwert mit einer vorgebbaren Schrittweite liegen, und dass das Feldgerät die Ausgangssignale als Stromsignale über die Schnittstelle ausgibt. Bei dem Feldgerät handelt es sich insbesondere um einen Aktor oder ein Messgerät.

Ein Parametriersystem mit einem Feldgerät und einer Parametriereinheit wird ggf. nur temporär erzeugt, indem eine Parametriereinheit mit dem Feldgerät für die Zeit der Parametrierung verbunden wird. Die Parametriereinheit ist beispielsweise eine Leitwarte, ein (vorzugsweise tragbarer) Computer oder ein Handheld als mobiles Bediengerät für Feldgeräte. Für den Abgriff des Ausgangssignals oder der Ausgangssignale dient beispielsweise die Parametriereinheit selbst oder ein Strommessgerät als einfache Variante.

Im Einzelnen gibt es eine Vielzahl von Möglichkeiten, das erfindungsgemäße Verfahren und das erfindungsgemäße Feldgerät auszugestalten und weiterzubilden. Dazu wird verwiesen einerseits auf die den Patentansprüchen 1 und 4 nachgeordneten Patentansprüche, andererseits auf die folgende Beschreibung von Ausführungsbeispielen in Verbindung mit der Zeichnung. In der Zeichnung zeigen

Fig. 1    eine schematische, im Wesentlichen die funktionalen Wirkzusammenhänge verdeutlichende Darstellung eines Systems zur Parametrierung eines Feldgeräts,

Fig. 2    eine schematische Darstellung eines Graphen zur Verdeutlichung der Erzeugung der Ausgangssignale als Stromsignale und

Fig. 3    ein Flussdiagramm einer beispielhaften Umsetzung des Parametrierverfahrens.

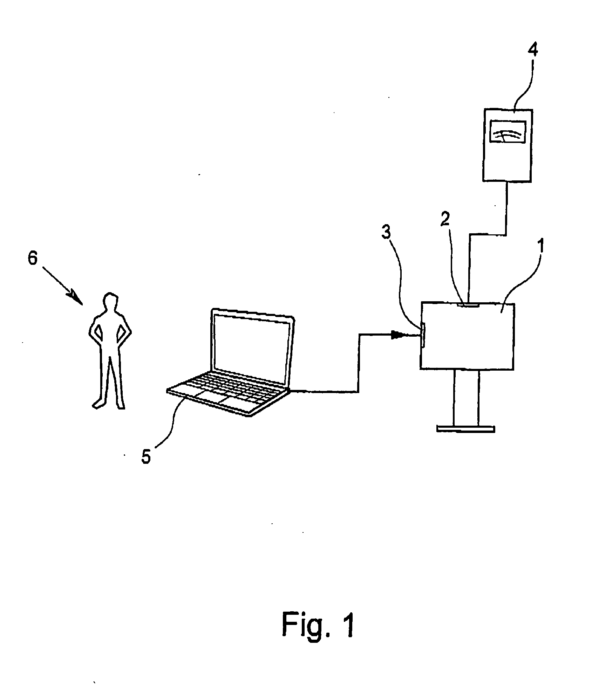

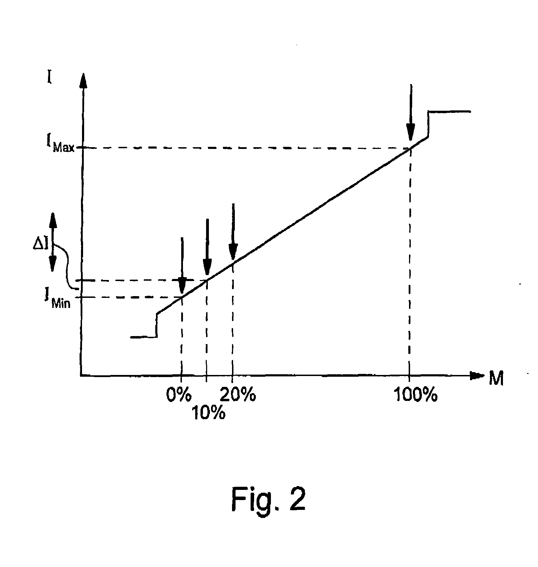

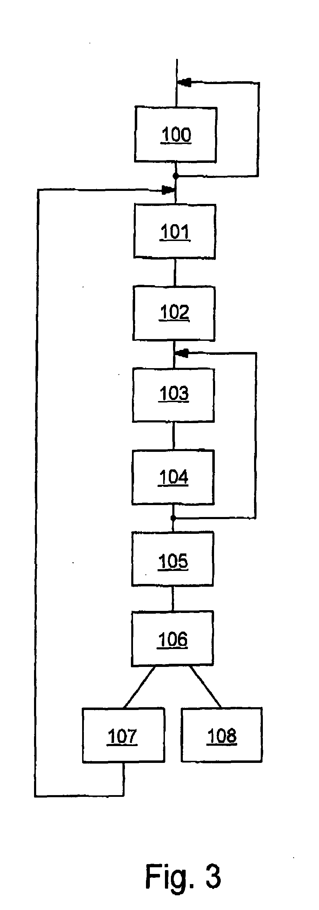

In den Fig. 1 ist ein Ausführungsbeispiel eines Parametriersystems dargestellt, wobei die Wirkzusammenhänge zwischen den verschiedenen Elementen verdeutlicht werden sollen. Der Graph der Fig. 2 verdeutlicht die Art der Erzeugung der Ausgangssignale in der Art wie es bei der Übertragung von Messwerten als 4...20 mA-Signalen üblich ist. Eingezeichnet ist die besondere Abfolge der Ausgangssignale, die sich in Folge des erfindungsgemäßen Parametrierverfahrens ergeben. Fig. 3 zeigt schließlich einen beispielhaften Ablauf einzelner Schritte des erfindungsgemäßen Parametrierverfahrens.

Die Fig. 1 zeigt ein Feldgerät 1, bei dem es sich als Beispiel um ein Füllstandsmessgerät nach dem Radar-Prinzip handelt. Das Feldgerät 1 verfügt über eine Schnittstelle 2, die als Stromausgang z. B. zur Anbindung an einen Zwei-Leiter bzw. an eine Stromschleife dient. In der dargestellten Ausgestaltung ist auch eine Service-Schnittstelle 3 vorgesehen, über die Parameter eingestellt oder Programm-Routinen gesteuert werden. Die Service-Schnittstelle 3 ist hier für die Anbindung mit einem elektrischen Leiter vorgesehen. Alternativ handelt es sich bei der Service-Schnittstelle 3 um eine direkte Eingabeeinheit des Feldgeräts, z. B. einem Touch-Display.

Das Feldgerät 1 ist für die Parametrierung mit zwei Vorrichtungen verbunden. Zum einen ist an der Schnittstelle 2 zur Ausgabe von Stromsignalen ein Strommessgerät 4 angeschlossen, das der Messung der Ausgangssignale des Feldgeräts 1 in Form von Stromsignalen dient. Zum anderen ist über die Service-Schnittstelle 3 mit dem Feldgerät 1 eine Parametriereinheit 5 - hier in Form eines tragbaren Computers - verbunden. Dadurch ergibt sich insgesamt ein ggf. nur temporär bestehendes System zur Parametrierung des Feldgeräts 1 durch einen Bediener 6.

Die Parameterwerte des Feldgeräts 1 werden über die Service-Schnittstelle 3 gesetzt. Dabei ist in dem Feldgerät 1 vorgesehen, dass manche Parameterwerte nur nach Eingabe eines Zugangscodes bzw. nach der Einstellung von speziellen Parametern (die damit beispielsweise als eine Art von Kipp-Schalter fungieren) veränderbar sind. Um insbesondere für sicherheitskritische Anwendungen sicherzustellen, dass die Parameterwerte richtig gesetzt worden sind, wird bei der gezeigten Ausgestaltung ein Rücklesen der Parameterwerte vorgenommen.

Die Ausgabe der Parameterwerte erfolgt über die Schnittstelle 2 durch die Erzeugung von Ausgangssignalen als Stromsignale. Ein Vorteil liegt insbesondere darin, dass das Feldgerät 1 z. B. nicht über eine Vorort-Anzeige verfügen muss. Beim System muss einfach ein Stromsignal abgegriffen und gemessen werden.

Um eine Zuordnung zwischen den Parameterwerten und dem Ausgangssignal bzw. beispielsweise dessen Stromstärke zu realisieren, wird ausgehend von mindestens einem Parameterwert ein Kontrollwert im Feldgerät 1 ermittelt. Dies erfolgt beispielsweise über eine passend hinterlegte Formel bzw. über hinterlegte Tabellen bzw. eine Kombination aus beiden Varianten. Aus dem Kontrollwert, der Träger der Information über mindestens einen Parameterwert bzw. über alle oder zumindest eine ggf. durch ihre Bedeutung z. B. auf die Sicherheit ausgezeichnete Gruppe von Parameterwerten ist, wird dann wiederum über eine vorgebbare Zuordnung mindestens ein Ausgangssignal generiert und als Stromsignal über die Schnittstelle 2 ausgegeben.

Das empfangene bzw. hier durch das Strommessgerät 4 gemessene Ausgangsignal erlaubt die Bestimmung eines Vergleichswerts, der bei einer optimalen Übertragung im Wesentlichen dem Kontrollwert entspricht. Da die Generierung des Kontrollwerts anhand vorbekannter Zusammenhänge geschieht, kann durch den Bediener 6 ggf. in Verbindung mit der Parametriereinheit 5 ein Sollwert ermittelt werden, der wie der Kontrollwert die Parameterwerte wiederspiegelt.

Stimmen der Vergleichswert und der Sollwert - ggf. innerhalb eines vorgebbaren Toleranzbereichs - miteinander überein, so quittiert der Bediener 6 über die Parametriereinheit 5 die Parameterwerte oder ggf. die komplette Einstellung des Feldgeräts 1, das daran anschließend für die Messung im Prozess verwendet werden kann.

Eine Art der Generierung der Ausgangssignale aufbauend auf den 4...20mA-Einheitssignalen der Prozessautomatisierung zeigt die Fig. 2.

Bei 4...20mA-Signalen oder ggf. auch 0...20mA-Signalen wird die Signalbreite der Stromstärke (I auf der Y-Achse des Graphen) von 4 mA bis 20 mA zur Übertragung von Messwerten (M auf der X-Achse des Graphen) verwendet, die zwischen dem kleinsten Messwert (entsprechend 4 mA) und dem maximalen Messwert (entsprechend 20 mA) angesiedelt sind. Dabei kann beispielsweise ein linearer Zusammenhang innerhalb dieses Bereichs zwischen der Stromstärke und dem Messwert verwendet werden. Ein Strom von 12 mA würde daher bedeuten, dass ein Messwert gemessen wurde, der mittig zwischen dem kleinsten und dem größten anzunehmenden Messwert liegt. Wird ein Stromsignal außerhalb dieser Bandbreite erzeugt, so signalisiert dies zumeist das Vorliegen eines Fehlers, weshalb auch die Bezeichnung Fehlerstrom besteht.

Der Kontrollwert wird für die Übertragung als Ausgangssignal entsprechend skaliert, so dass er eine Übertragung als 4...20mA-Signal erlaubt. Dabei wird hier insbesondere eine Mehrzahl von Ausgangssignalen erzeugt, durch die die Bandbreite zwischen 4 mA als minimalem Strom $I_{MIN}$ und 20 mA als maximalem Stromsignal $I_{MAX}$ abgefahren wird. Die Schrittweite wird beispielhaft mit 10%-Schritten gesetzt. Daher kann ggf. auch aufgrund einer Interpolation der gemessenen Ausgangssignale auf den Kontrollwert geschlossen werden. Weiterhin können so ggf. Fehler bei der Übertragung erkannt werden, wenn es z. B. zu Abweichung vom vorgegebenen Variationsschema kommt.

In einer Ausgestaltung werden auch Ausgangssignale geniert, die außerhalb des normalen Bereichs - also hier kleiner als 4 mA oder größer als 20 mA - generiert werden.

Die Fig. 3 zeigt einen Ablauf der Schritte des Parametrierverfahrens, wie es beispielhaft in dem in der Fig. 1 dargestellten System oder in ähnlich ausgestalteten Parametriersystemen realisiert wird. Dabei sind jedoch auch andere Schrittabfolgen oder weitere Schritte innerhalb des Rahmens der Erfindung möglich.

Im Schritt 100 wird über die Parametriereinheit ein Parameterwert des Feldgeräts gesetzt. Dieser Schritt 100 wird ggf. mehrmals wiederholt, wenn mehrere Parameterwerte gesetzt werden sollen. Der Zugriff hängt dabei auch davon ab, welche Parameterwerte für eine Eingabe freigeschaltet sind. In einer alternativen Ausgestaltung werden für jeden eingegebenen Parameterwert die dem Schritt 100 folgenden Schritte abgearbeitet.

Im Schritt 101 wird vom Feldgerät ausgehend von den aktuell gesetzten Parameterwerten oder alternativ von allen Parameterwerten, die sich im Feldgerät eingeben lassen, ein Kontrollwert ermittelt, indem beispielsweise Daten aus im Feldgerät hinterlegten Tabellen und eine zugeordnete und ebenfalls passend hinterlegte Formel verwendet werden.

Im Schritt 102 wird auf der Seite des Bedieners oder insbesondere in der Parametriereinheit ein Sollwert für die eingegebenen Parameterwerte ermittelt. Wird insbesondere für die Ermittlung des Kontrollwerts und des Sollwerts der gleiche Algorithmus verwendet und sind die Parameterwerte ordnungsgemäß übermittelt worden und angekommen, so besteht in diesem Idealfall Übereinstimmung zwischen Soll- und Kontrollwert. Die Sollwerte werden beispielsweise in einem Handbuch hinterlegt.

Der Kontroll- und der Sollwert sind beispielsweise zusätzlich abhängig von einem Messwert, insofern es sich bei dem Feldgerät - wie bei der Ausgestaltung der Fig. 1- um ein Messgerät handelt.

Ein prinzipieller Zusammenhang zwischen dem Kontrollwert und einem Parameterwert, der sich insbesondere eindeutig in einem Skalierungswert niederschlägt, ist beispielsweise gegeben über die Abhängigkeit:

$$\text{Kontrollwert} = \quad (\text{Messwert} * \text{Skalierungsfaktor}) * \text{Linearisierung} - \text{Nullpunkttoleranz}.$$

Dabei nimmt die Linearisierung auf den zugehörigen Bereich für die Signale Rücksicht und die Nullpunkttoleranz bedeutet eine Verschiebung der jeweils verwendeten Skala.

Im Schritt 103 erzeugt das Feldgerät in Abhängigkeit vom Kontrollwert ein Ausgangssignal und gibt dieses als Stromsignal über eine entsprechende Schnittstelle aus. Im Schritt 104 erfolgt eine passende Strommessung an der verwendeten Schnittstelle des Feldgeräts. Um die Übertragungssicherheit zu erhöhen, wird das Ausgangssignal entsprechend einer Variationsabfolge mehrfach ausgegeben (Schritt 103) und wird jeweils passend ein Stromwert gemessen (Schritt 104).

Aus den einzelnen Stromwerten der Ausgangssignale wird dann im Schritt 105 ein Vergleichswert ermittelt, der im Schritt 106 mit dem Sollwert verglichen wird. Stimmen beide Werte überein, so sind im Feldgerät die richtigen Parameterwerte gesetzt worden und der Vorgang kann im Schritt 107 beendet werden. Wird jeweils nur eine Untermenge der Parameterwerte zurückgelesen, so findet im Fall der Übereinstimmung ein Rücksprung zu Schritt 101 statt, so dass auch für andere Parameterwerte der Kontrollwert ermittelt und die weiteren Schritte ausgeführt werden können. Dies wird entsprechend wiederholt, bis alle vorgegebenen Parameterwerte kontrolliert worden sind.

Unterscheiden sich die Werte über einen vorgebbaren Toleranzbereich hinaus, so beginnt im Schritt 108 eine Fehlersuche.

**Patentansprüche**

1. Verfahren zur Parametrierung eines Feldgeräts (1), wobei mindestens ein Parameterwert des Feldgeräts (1) einstellbar ist und das Feldgerät (1) mindestens eine Schnittstelle (2) aufweist und wobei mindestens ein zumindest von dem mindestens einen Parameterwert abhängiger Kontrollwert ermittelt wird,
   **dadurch gekennzeichnet,**
   **dass** mindestens zwei zumindest vom Kontrollwert abhängige und sich voneinander unterscheidende Ausgangssignale des Feldgeräts (1) erzeugt und als Stromsignale über die Schnittstelle (2) des Feldgeräts (1) ausgegeben werden, wobei die Ausgangssignale derartig erzeugt werden, dass die Ausgangssignale zwischen einem vorgebbaren Minimalwert ($I_{MIN}$) und einem vorgebbaren Maximalwert ($I_{MAX}$) mit einer vorgebbaren Schrittweite ($\Delta I$) liegen.

2. Verfahren nach Anspruch 1, **dadurch gekennzeichnet, dass** mindestens ein Ausgangssignal derartig erzeugt wird, dass es außerhalb eines vorgebbaren Signalbereichs liegt.

3. Verfahren nach Anspruch 1 oder 2, **dadurch gekennzeichnet, dass** das Feldgerät (1) als Messgerät ausgestaltet ist und dass der mindestens eine Kontrollwert in Abhängigkeit von einem Messwert erzeugt wird.

4. Feldgerät (1) mit mindestens einer Schnittstelle (2), wobei mindestens ein Parameterwert des Feldgeräts (1) einstellbar ist und wobei bei einer Parametrierung das Feldgerät (1) mindestens einen zumindest von dem mindestens einen Parameterwert abhängigen Kontrollwert ermittelt,
   **dadurch gekennzeichnet,**
   **dass** das Feldgerät (1) mehrere sich voneinander unterscheidende und mindestens vom Kontrollwert abhängige Ausgangssignale derartig erzeugt, dass die Ausgangssignale zwischen einem vorgebbaren Minimalwert ($I_{MIN}$) und einem vorgebbaren Maximalwert ($I_{MAX}$) mit einer vorgebbaren Schrittweite ($\Delta I$) liegen, und dass das Feldgerät (1) die Ausgangssignale als Stromsignale über die Schnittstelle (2) ausgibt.

5. Feldgerät (1) nach Anspruch 4, **dadurch gekennzeichnet, dass** das Feldgerät (1) mindestens ein Ausgangssignal derartig erzeugt, dass es außerhalb eines vorgebbaren Signalbereichs liegt.

6. Feldgerät (1) nach Anspruch 4 oder 5, **dadurch gekennzeichnet, dass** das Feldgerät (1) als Messgerät ausgestaltet ist und dass das Feldgerät (1) den mindestens einen Kontrollwert in Abhängigkeit von einem Messwert erzeugt.

**Claims**

1. Method for parameterization of a field device (1), wherein at least one parameter value of the field device (1) is adjustable and the field device (1) has at least one interface (2) and wherein at least one control value is determined dependent at least on the at least one parameter value,
   **characterized in**
   **that** at least two output signals of the field device (1) are generated at least dependent on the control value and are output via the interface (5) of the field device (1) as current signals, wherein the output signals are generated such that the output signals lie between a pre-definable minimum value ($I_{MIN}$) and a pre-definable maximum value ($I_{MAX}$) with a pre-definable increment ($\Delta I$).

2. Method according to claim 1, **characterized in that** at least one output signal is generated such that it is outside a pre-definable signal range.

3. Method according to claim 1 or 2, **characterized in that** the field device (1) is designed as a measuring device and that the at least one control value is generated depending on a measured value.

4. Field device (1) having at least one interface (2), wherein at least one parameter value of the field device (1) can be set and wherein at least one control value at least dependent on the at last one parameter value is determined,
   **characterized in**
   **that** the field device (1) generates several output signals differing from one another and dependent at least on the control value, that the output signals lie between a pre-definable minimum value ($I_{MIN}$) and a pre-definable maximum value ($I_{MAX}$) with a pre-definable increment ($\Delta I$), and that the field device (1) emits output signals as current signals via the interface (2).

**5.** Field device (1) according to claim 4, **characterized in that** the field device (1) generates an output signal such that it lies outside a pre-definable signal range.

**6.** Field device (1) according to claim 4 or 5, **characterized in that** the field device (1) is designed as measuring device and that the field device (1) generates the at last one control value depending on a measured value.


**Revendications**

**1.** Procédé de paramétrage d'un appareil de terrain (1), dans lequel la valeur d'au moins un paramètre de l'appareil de terrain (1) peut être réglée, l'appareil de terrain (1) présentant au moins une interface (2), au moins une valeur de contrôle qui dépend de la valeur du ou des paramètres étant déterminée,
**caractérisé en ce que**
au moins deux signaux de sortie dépendant au moins de la valeur de contrôle et différents l'un de l'autre sont formés par l'appareil de terrain (1) et sont délivrés sous la forme de signaux de courant sur l'interface (2) de l'appareil de terrain (1), les signaux de sortie étant formés de telle sorte que les signaux de sortie soient situés entre une valeur minimale ($I_{MIN}$) prédéterminée et une valeur maximale ($I_{MAX}$) prédéterminée, à une largeur de pas ($\Delta I$) prédéterminée.

**2.** Procédé selon la revendication 1, **caractérisé en ce qu'**au moins un signal de sortie est formé de manière à être situé à l'extérieur d'une plage prédéterminée de signaux.

**3.** Procédé selon les revendications 1 ou 2, **caractérisé en ce que** l'appareil de terrain (1) est configuré comme appareil de mesure et **en ce que** la ou les valeurs de contrôle sont formées en fonction d'une valeur de mesure.

**4.** Appareil de terrain (1) présentant au moins une interface (2), la valeur d'au moins un paramètre de l'appareil de terrain (1) pouvant être réglée et l'appareil de terrain (1) déterminant lors d'une paramétrisation au moins une valeur de contrôle qui dépend de la valeur du ou des paramètres,
**caractérisé en ce que**
l'appareil de terrain (1) forme plusieurs signaux de sortie différents les uns des autres et dépendant au moins de la valeur de contrôle,
**en ce que** les signaux de sortie sont situés entre une valeur minimale ($I_{MIN}$) prédéterminée et une valeur maximale ($I_{MAX}$) prédéterminée, à une largeur de pas ($\Delta I$) prédéterminée et
**en ce que** l'appareil de terrain (1) délivre les signaux de sortie sous la forme de signaux de courant sur l'interface (2).

**5.** Appareil de terrain (1) selon la revendication 4, **caractérisé en ce que** l'appareil de terrain (1) forme au moins un signal de sortie de telle sorte qu'il soit situé à l'extérieur d'une plage de signaux prédéterminée.

**6.** Appareil de terrain (1) selon les revendications 4 ou 5, **caractérisé en ce que** l'appareil de terrain (1) est configuré comme appareil de mesure et **en ce que** l'appareil de terrain (1) forme la ou les valeurs de contrôle en fonction d'une valeur de mesure.

Fig. 1

Fig. 2

9

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055971
- DE 102010062908 A1
- EP 0809222 A1
- EP 1860513 A2